# EUROPEAN PATENT APPLICATION

(11) **EP 1 346 630 A2**
(43) Date of publication of application: **24.09.2003**
(21) Application number: 03005913.3
(22) Date of filing: 17.03.2003
(51) Int. Cl.: A01J 5/04, G05D 16/00

(54) **Servo-assisted vacuum control valve of medium-low capacity for milking plants**

(30) Priority: 21.03.2002 IT MI20020154 U
(71) Applicant: INTERPULS S.P.A., 42020 Albinea, Reggio Emilia (IT)
(72) Inventor: Sicuri, Roberto, 43100 Parma (IT); Nicolini, Gabriele, 42042 Fabbrico, Reggio Emilia (IT)
(74) Representative: Giambrocono, Alfonso, Dr. Ing.

(57) **Abstract**

The control valve (10) for the vacuum level in a milking plant is of servo-assisted type for medium-low capacity, and has a valving element (32) of plastic material suitable for contact with foods. The valving element (32) comprises: a hollow stem (34), the cavity of which is at least partly threaded (38,40) for partial engagement (38) with a screw (36) which enables one end of the stem (34) to be fixed to the main elastic membrane (30) of the valve (10); a seal element (42) intended to close the air passage channel (18), the seal element (42) being coaxial to the stem (34) and presenting a coaxial through hole (44); and a coaxial stabilizer (48) insertable into the air passage channel (18) and provided with angularly equidistant fins (50), the stabilizer (48) being provided with a coaxial shank (46) the threaded free end of which is insertable into the through hole (44) of the seal element (42) and can be screwed into a part (40) of the threaded cavity of the stem (34).

## Description

The present invention relates to valves for controlling the vacuum level in a milking plant.

As is well known to the expert of the art, the vacuum control valve is a component of fundamental importance in milking plants. Its function is to control the vacuum level within the milking plant to a predetermined set value based on the plant working conditions. The correct operation of this valve is very important because it directly influences the quality of the milking operation.

These valves are characterised by the maximum air flow through them and by whether or not they are servo-assisted.

A vacuum control valve of the servo-assisted type for a medium-high air flow is described in Italian utility model application MI99U 000631, of the same proprietor as the present application. In this valve the valving element is controlled by a main elastic membrane of the valve, the servo-control being removably fixed to the valve. Specifically, a helical spring acts on the central region of the main membrane to which the far end of the valving element is fixed, to prevent undesirable oscillations of this membrane while not preventing the movement of the valving element itself. In the marketed version of this valve, the valving element comprises: a stem, one end of which is fixed by a screw to the elastic membrane; a frusto-conical seal element located at the other end of the stem and intended to close the air passage channel through the valve body; and a stabilizer to be inserted into the air passage channel and consisting essentially of four fins spaced angularly apart by 90 degrees. These fins serve the dual purpose of keeping the valving element aligned with the air passage channel while at the same time eliminating turbulence of the relative air flow.

This valving element is made in one piece from stainless steel and is decidedly costly to construct. It also has a weight of about 500 g which, being a medium-high capacity valve, is necessary for proper valve operation. The valving element (as in the case of all known valves of this type) must be disposed vertically, because another orientation would substantially influence the valve operation.

As known to the expert of the art, other known vacuum control valves have their valving element also of stainless steel, or of nickel-plated steel and rubber, in this latter case a considerable part of the valving element being in any event of steel. It should be noted that all these known valving elements are decidedly costly, mainly because of the mechanical machining required to form them. Moreover, in the version comprising a rubber sealing part, this latter deteriorates rather rapidly with time as the rubber acts in the region of contact with the relative valve seat.

Returning to the valve of MI99U 000631, this has proved very precise and sensitive to vacuum variations, but (as stated) is specifically suitable for medium-high air flows.

An object of the present invention is to provide a servo-assisted vacuum control valve, of the aforedescribed type, but specifically suitable for medium-low flows.

Another object is to provide a valve of this type which is not bound by the vertical orientation of the valving element, and can therefore be disposed in any orientation without its operation being influenced.

These objects are attained by the valve of the present invention, characterised in that the valving element is of a plastic material suitable for contact with food. This enables the weight of the valving element to be considerably reduced, so that in practice this weight has no influence on the operation of the valve, whatever its orientation.

It is important that the valving element be formed of an injection-mouldable plastic material, so ensuing a high dimensional stability together with considerable hardness.

The plastic material to be used must enable a valving element, or its parts, to be obtained with extremely small dimensional tolerances (not exceeding 0.03-0.04 mm) and in addition present a hardness which prevents formation, with the passage of time, of surface incisions or other irregularities in the region of contact with the valve seat which can compromise valve operation. Such a plastic material is for example polycarbonate.

It should be noted that the aforedescribed solution is not applicable in the case of vacuum control valves of medium-high air flow, because (as already stated) for a valve of medium-high flow to be able to operate, its valving element must have a certain weight and be disposed vertical. Conveniently the valving element of the valve according to the invention is constructed in three separate parts to be fitted together, namely: a hollow stem, the cavity of which is at least partly threaded for partial engagement with a screw enabling one end of the stem to be fixed to the main elastic membrane of the valve; a seal element for closing the air passage channel provided within the valve body, the seal element being coaxial to the stem and presenting a coaxial through hole; and a coaxial stabilizer insertable into the air passage channel and provided with angularly equidistant fins, the stabilizer being provided with a coaxial shank the threaded free end of which is insertable into the through hole of the seal element and is partly screwable into the threaded cavity of the stem. Conveniently the valve body comprises: a main body in which the air passage channel is provided and which contains the valving element and the main membrane; an intermediate body acting as a cover for the chamber housing the main membrane and also as a seat for receiving the servo-control membrane; and a completing body which encloses the rest of the servo-control.

The invention will be more apparent from the following description of one embodiment thereof provided by way of example. In this description reference is made to the accompanying drawings, in which:
Figure 1 is a side elevation of the valve of the present invention;
Figure 2 is a section therethrough on a coaxial plane parallel to the plane of the sheet of Figure 1, but also showing an additional device for filtering the air;
Figure 3 is an exploded coaxial vertical section through the valving element of the valve; and
Figure 4 is a section similar to Figure 2, but with the valving element mounted.

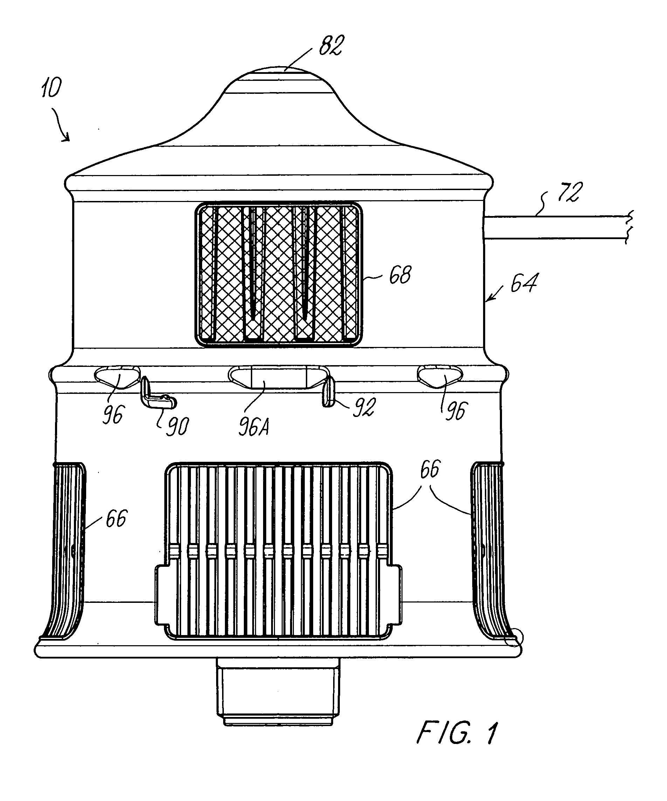

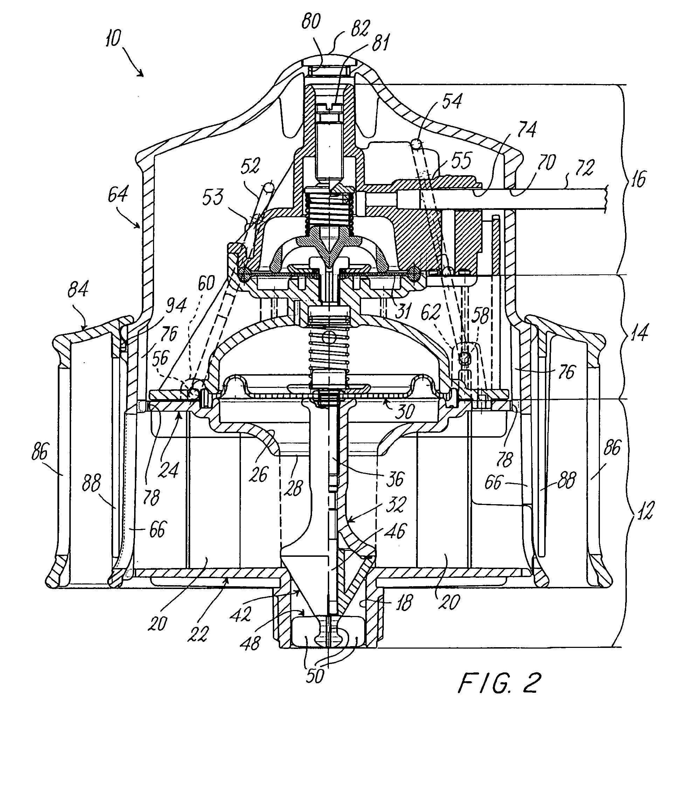

As can be seen from Figures 1 and 2, the vacuum control valve 10 shown therein is of the servo-assisted type and comprises a main body 12, an intermediate body 14 and a completion body 16, together with the means for maintaining these bodies joined together (means described hereinafter).

The main body 12 is one of the characteristic elements of the valve, in that within it there is provided the air passage channel, indicated by 18, the diameter of which determines the maximum allowable air flow, this diameter in the present case being such as to achieve a medium-low flow rate of between 350 and 1750 litres/minute. As can be seen from Figure 2, the main body 12 has a compact robust structure, by virtue of a series of vertical diametrical fins 20 which connect its lower part 22, shaped as a circular ring when viewed in plan, to its upper part 24 which is also of circular ring shape when viewed in plan but presents a recessed central portion which lowerly bounds a coaxial circular through hole 28.

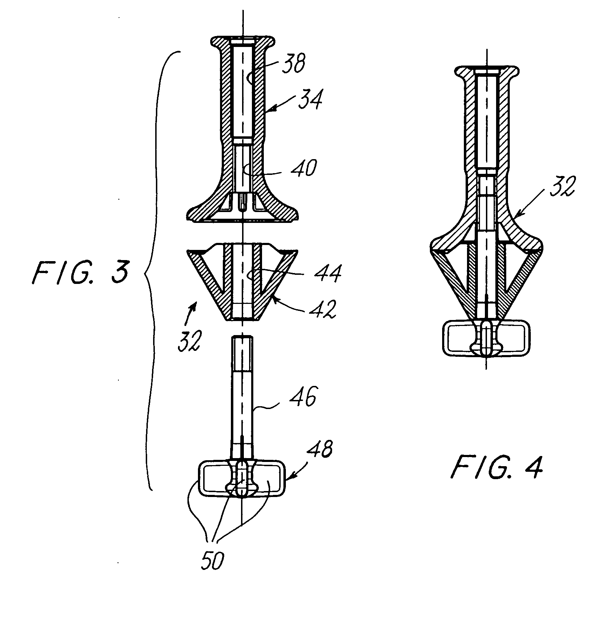

Besides acting as a base for the valve 10 and enabling it to be connected to the vacuum line of the milking plant, the main body 12 also contains the main elastic membrane 30 (so called to distinguish it from that of the servo-control) and the valving element 32. The main membrane 30 is of conventional type, whereas the valving element 32 is of totally new type. In this respect, this latter is not even partly of metal, it being entirely of a plastic material suitable for contact with foods (for example polycarbonate). In addition the valving element 32 is formed of three separate parts to be fitted together, it being possible and convenient to produce these by injection moulding in a single mould. Specifically, as can be seen in Figure 3, the valving element 32 comprises a hollow stem 34 having the upper part 38 of its cavity threaded to enable a screw 36 to be screwed therein to fix the valving element 32 to the central part of the membrane 30 in conventional manner. The lower part 40 of the cavity of the valving element 32 is also threaded in its most inner portion, but has a smaller diameter than the upper threaded part 38, to prevent mounting errors.

As can be seen from Figures 3 and 4, at its bottom, the stem 34 widens in order to mate with a frusto-conical intermediate part 42, which forms the seal element of the valving element 32, for closing the air passage channel 18 (Figure 2). The peripheral ring of contact between the wide lower edge of the stem 34 and the upper edge of the seal element 42 presents a toothed profile which prevents relative rotational movement, which could be caused by operational vibration. As can be seen, the seal element 42 presents a coaxial through hole 44 into which the shank 46 of a stabilizer 48 forming the third part of the valving element 32 can be inserted. The upper end portion of the shank 46 is threaded for screwing into the lower threaded portion 40 of the stem 34, so enabling the valving element 32 to be assembled (as shown in Figure 4). Four fins 50 forming one piece with the shank 46 extend radially and angularly equidistant from the lower end of the shank 46. As already stated, the function of the fins 50 is to eliminate turbulence of the air flow passing through the air passage channel 18.

As is apparent from Figure 3, the geometry of the various parts of the valving element, and in particular their thickness, has been chosen such that by using a suitable plastic material (such as for example the said polycarbonate), a valving element of high dimensional regularity (small tolerances) can be obtained.

The intermediate body 14 of the valve 10 performs the double function of cover for the chamber holding the main membrane 30 and seat for the elastic membrane 31 of the servo-control. As can be seen from Figure 2, the intermediate body 14 also has an extremely rigid robust structure to prevent vacuum loss resulting from deformation of said structure, and also to provide a solid support base for the completion body 16, which encloses the rest of the servo-control. This latter is not described as it is of conventional type.

As already stated, means are provided to maintain the main body 12, the intermediate body 14 and the completion body 16 joined together. In this specific example these means comprise two invertable clamping forks 52 and 54, which can be forced over relative locators 53, 55 provided for this purpose on the completion body 16. The two lower ends (56 and 58 respectively) of each of the forks 52 and 54 are hinged to relative lugs (60 and 62 respectively) projecting upwards from the main body 12 and integral therewith. Conveniently the two side branches of the two forks 52 and 54 are not rectilinear (in this example they present a bend which is not visible) so that they also operable by flexure as well as by traction, to offer greater adaptability on assembling the three bodies 12, 14 and 16. The valve 10 is completed by a covering 64 symmetrical about a vertical axis, which encloses the assembly formed by the three bodies 12, 14 and 16. As can be seen from Figure 1, the covering 64 presents in the lower part of its side wall four wide angularly equidistant first windows 66 closed by a relative grille to prevent foreign bodies (particularly insects) from entering the valve 10 together with the air. The covering 64 also presents in the top of its lateral wall two smaller opposing second windows 68. The windows 68 house relative conventional filter cloths for filtering the so-called consumable air required to operate the servo-control. Inside the covering 64 there are provided means enabling it to be mounted only with a determined orientation. Specifically, ribs (indicated by 76 in Figure 2) are provided insertable into corresponding notches 78 provided in the main body 12. This means that the through hole 70 (Figure 2) provided in the side wall of the covering 64 lies in the correct position to enable the nozzle 74 to be centered for inserting the vacuum take-off pipe 72 therein (as shown in Figure 2). Consequently on installing the valve 10 on the plant vacuum line, or on removing the valve, the entire valve can be rotated (so that it can be easily unscrewed or screwed down). The side wall of the covering 64 externally presents bosses 96 and 96A which facilitate this screwing and unscrewing.

At its top the covering 64 presents a through coaxial hole 80, into which a cap 82 is pressed. The hole 80 lies in correspondence with the adjustment device 81 of the valve 10. By removing the cap 82, the valve can be adjusted (in conventional manner, by means of a screwdriver) without having to remove the covering 64, so also avoiding the need to withdraw the pipe 72.

Finally it should be noted that the valve 10 can be provided with a filter device for the air entering from the window 66. For simplicity, this filter device is shown in section only in Figure 2 and essentially comprises a lowerly open hollow annular casing 84. The inner and outer side walls of the filter casing 84 present grille-covered windows 86 and 88 in a position corresponding to that of the widows 66 of the covering 64, between the windows 86 and 88 there being disposed relative conventional filter cloths (not shown for simplicity) which enable all the air entering the valve 10, and hence entering the milking plant, to be filtered. The filter casing 84 is applied to the valve 10 by simply mounting it over the covering 64 from above, this latter being provided externally with projections (two of which are visible in Figure 1 and indicated by 90 and 92) arranged to cooperate, together with the bosses 96A, with projections 94 (Figure 2) provided on the inner side wall of the filter casing 84, hence enabling the filter casing 84 to be bayonet-mounted onto the covering 64.

Conveniently the medium-low capacity valve of the present invention can be constructed in two different types, namely a first type for low flow rates (for example from 350 to 1000 litres/minute) and a second valve type for medium flow rates (for example from 1000 to 1750 litres/minute).

## Claims

1. A servo-assisted vacuum control valve (10) of medium-low capacity for milking plants, the valve being of the type provided with a main elastic membrane to which the end of the valving element is connected, the valve servo-control being of elastic membrane type, **characterised in that** the valving element (32) is of a plastic material suitable for contact with food.

2. A valve (10) as claimed in claim 1, wherein the plastic material used to form the valving element (32) is injection-mouldable and is of the type which ensures a high dimensional stability together with considerable hardness.

3. A valve (10) as claimed in claim 2, wherein the plastic material used to form the valving element (32) is polycarbonate.

4. A valve (10) as claimed in claim 1, wherein the valving element comprises: a hollow stem (34), the cavity of which is at least partly threaded (at 38, 40) for partial engagement with a screw (36) which enables one end of the stem (34) to be fixed to the main elastic membrane (30) of the valve (10); a seal element (42) intended to close the air passage channel (18) provided in the body of the valve (10), the seal element (42) being coaxial to the stem (34) and presenting a coaxial through hole (44); and a coaxial stabilizer (48) insertable into the air passage channel (18) and provided with angularly equidistant fins (50), the stabilizer (48) being provided with a coaxial shank (46) the threaded free end of which is insertable into the through hole (44) of the seal element (42) and can be screwed into a part (40) of the threaded cavity of the stem (34).

5. A valve (10) as claimed in claim 1, wherein the body of the valve (10) comprises: a main body (12) in which the air passage channel (18) is provided and which contains the valving element (32) and the main membrane (30); an intermediate body (14) acting as a cover for the chamber housing the main membrane (30) and also as a seat for receiving the membrane (31) of the servo-control; and a completing body (16) which encloses the rest of the servo-control.

6. A valve (10) as claimed in claim 5, wherein the main body (12), the intermediate body (14) and the completion body (16) are fitted together by a pair of clamping forks (52, 54) the ends (56, 58) of which are hinged to the main body (12), the forks (52, 54) being forced over corresponding locators (53, 55) provided on the completion body (16).

7. A valve (10) as claimed in claim 6, wherein the two lateral branches of the forks (52, 54) are not rectilinear in order to also operate under flexure, hence allowing greater adaptability of the forks (52, 54).

8. A valve (10) as claimed in claim 5, wherein a covering (64) is provided enclosing the assembly comprising the main body (12), the intermediate body (14) and the completion body (16), the covering (64) presenting windows (66) provided with a grille to prevent foreign bodies entering the valve (10), the covering (64) also presenting second windows (68) housing relative filter cloths to filter the servo-control consumable air.

9. A valve as claimed in claim 8, wherein means (76, 78) are provided to enable the covering (64) to be mounted only with a determined orientation.

10. A valve (10) as claimed in claim 9, wherein the side wall of the covering presents bosses (96, 96A) which facilitate the mounting and demounting of the entire valve (10) onto and from the relative pipe of the milking plant.

11. A valve (10) as claimed in claim 8, wherein the covering (64) presents a through hole (80) providing access to the adjustment device (81) of the valve (10), the hole (80) being closable by a cap (82).

12. A valve (10) as claimed in claim 1, comprising a filtering device (84) for the air entering the valve (10).

13. A valve (10) as claimed in claims 12 and 8, wherein the filtering device comprises a filter casing (84)provided with filters for the air entering the valve (10).

14. A valve (10) as claimed in claim 13, wherein the filter casing (84) and the covering (64) are provided with means (90, 92, 96A, 94) which enable the filter casing (84) to be bayonet-fitted onto the covering (64).

15. A valve (10) as claimed in claim 1, constructed in two types: a first type of low capacity and a second type of medium capacity.

16. A valve (10) as claimed in claim 15, wherein the type of low capacity has a flow rate from 350 to 1000 litres/minute, and the type of medium capacity has a flow rate from 1000 to 1750 litres/minute.

17. A valve (10) as claimed in claim 4, wherein the seal element 42 is frusto-conical.

18. A valve (10) as claimed in claim 4, wherein that end of the stem (34) facing the seal element (42) is widened to mate with the base of the cone frustum forming the seal element (42).

19. A valve (10) as claimed in claim 18, wherein the peripheral ring of contact between the widened end of the stem (34) and the seal element (42) presents a toothed profile to prevent relative rotational movement.
